# EUROPEAN PATENT APPLICATION

(11) **EP 4 779 445 A1**
(43) Date of publication of application: **22.07.2026**
(21) Application number: 24870552.7
(22) Date of filing: 19.09.2024
(51) Int. Cl.: G06F 3/0482, G06F 3/04842

(54) **POINT OF INTEREST DISPLAY METHOD AND APPARATUS, AND ELECTRONIC DEVICE**

(30) Priority: 27.09.2023 CN 202311260401
(71) Applicant: HUAWEI TECHNOLOGIES CO., LTD., Shenzhen 518129 (CN)
(72) Inventor: DAI, Min, Shenzhen, Guangdong 518129 (CN); HE, Jianan, Shenzhen, Guangdong 518129 (CN); YANG, Jiaheng, Shenzhen, Guangdong 518129 (CN)
(74) Representative: Thun, Clemens
(86) International application number: PCT/CN2024/119664
(87) International publication number: WO 2025/067008

(57) **Abstract**

A point of interest display method, applied to an electronic device, includes: displaying a first interface, where the first interface includes a first page in a first application; displaying a second interface in response to an obtained first operation, where the second interface includes the first page and an operable control associated with a point of interest included on the first page, and one point of interest is associated with one operable control; and displaying a third interface in response to an operation of selecting a first operable control in the second interface, where the third interface includes the first page and a floating window, the floating window includes a map, a location of a first point of interest is marked on the map, and the first point of interest is associated with the first operable control. In this way, a location of a point of interest that a user is interested in is presented in a form of a floating window, so that the user can view, on a page that the user currently browses, the location of the point of interest that the user is interested in, without performing switching between applications. This reduces operation steps of viewing the location of the point of interest, and improves user experience.

## Description

This application claims priority to Chinese Patent Application No. 202311260401.6, filed with the China National Intellectual Property Administration on September 27, 2023 and entitled "POINT OF INTEREST DISPLAY METHOD, APPARATUS, AND ELECTRONIC DEVICE", which is incorporated herein by reference in its entirety.

### TECHNICAL FIELD

This application relates to the field of information technologies (information technologies, ITs), and in particular, to a point of interest display method, an apparatus, and an electronic device.

### BACKGROUND

In a process of using an electronic device, when a user views, on a page of an application, a point of interest (point of interest, POI) that the user is interested in, if the user needs to know a specific location of the POI on a map, the user may first copy (or memorize) a name of the POI, exit the current application, open a map application, and finally paste the name that is of the POI and that is copied by the user (or manually enter the name that is of the POI and that is memorized by the user) in the map application for search. During query of the specific location of the POI, switching between applications may be caused by text copy restriction or a memory error, and repeated operations are performed a plurality of times, resulting in a tedious and complex entire process.

### SUMMARY

This application provides a point of interest display method, an apparatus, an electronic device, a computer storage medium, and a computer product, to reduce operation steps of viewing a location of a POI, and improve user experience.

According to a first aspect, this application provides a point of interest display method, and the point of interest display method may be applied to an electronic device. The method includes: displaying a first interface, where the first interface includes a first page in a first application; displaying a second interface in response to an obtained first operation, where the second interface includes the first page and an operable control associated with a point of interest included on the first page, and one point of interest is associated with one operable control; and displaying a third interface in response to an operation of selecting a first operable control in the second interface, where the third interface includes the first page and a floating window, the floating window includes a map, a location of a first point of interest is marked on the map, and the first point of interest is associated with the first operable control.

In this way, a location of a point of interest that a user is interested in is presented in a form of a floating window, so that the user can view, on a page that the user currently browses, the location of the point of interest that the user is interested in, without performing switching between applications. This reduces operation steps of viewing the location of the point of interest, and improves user experience.

In a possible implementation, after displaying the third interface, the method further includes: recording the first point of interest in response to an operation of triggering a first control in the floating window, where the first control is used to add a point of interest to favorites. In this way, the point of interest that the user is interested in may be added to favorites, so that the user can quickly view the point of interest subsequently.

In a possible implementation, the operable control is at a location of the point of interest associated with the operable control.

In a possible implementation, the second interface includes a first pop-up window, the first pop-up window includes the operable control, and a name of the point of interest associated with the operable control is displayed on the operable control.

In a possible implementation, after displaying the third interface, the method further includes: closing the floating window in response to an operation of closing the floating window. In this way, the floating window can be closed and an original interface can be returned to.

In a possible implementation, after closing the floating window, the method further includes: displaying a fourth interface in response to an operation of starting a component related to the floating window, where the fourth interface includes a map, and a location of a point of interest that is added by the user to favorites in at least one application is marked on the map. In this way, the user can quickly re-access a point of interest that is previously added by the user to favorites, without searching, in different applications, for a message record or content that is added by the user to favorites, thereby reducing an operation of viewing a point of interest, and improving user experience.

In a possible implementation, after displaying the fourth interface, the method further includes: displaying a fifth interface in response to an operation of viewing description information of the point of interest that is added to favorites, where the fifth interface includes description information of at least one point of interest that is added by the user to favorites, and the description information includes a name and an address of the point of interest, and a jump link of a page to which the point of interest belongs. In this way, the user can quickly learn the description information of the point of interest that is added by the user to favorites, and therefore can quickly view a point of interest required by the user.

In a possible implementation, after displaying the fifth interface, the method further includes: switching the fifth interface to a sixth interface in response to an operation of triggering a first jump link, where the first jump link is a jump link of a page to which a second point of interest belongs, and the sixth interface includes the page to which the second point of interest belongs. In this way, the user can quickly view a page to which a point of interest that the user is interested in belongs. This improves user experience.

In a possible implementation, after displaying the fifth interface, the method further includes: in response to an operation of performing screening on the point of interest that is added to favorites, updating a point of interest displayed in the fifth interface. In this way, the user may select, according to a requirement of the user, a point of interest that the user needs to view.

In a possible implementation, after displaying the fourth interface, the method further includes: in response to an operation of selecting a third point of interest marked on the map, displaying, around the third point of interest, content that matches a preference of the user, where the preference of the user is determined based on at least the point of interest that is added by the user to favorites. In this way, personalized recommendation can be provided for the user, thereby improving user experience.

According to a second aspect, this application provides a point of interest display method, applied to an electronic device, including: displaying a first interface; and displaying a second interface in response to an operation of starting a component related to a floating-window map application, where the second interface includes a map, and a location of a point of interest that is added by a user to favorites in at least one application is marked on the map. In this way, the user can quickly re-access a point of interest that is previously added by the user to favorites, without searching, in different applications, for a message record or content that is added by the user to favorites, thereby reducing an operation of viewing a point of interest, and improving user experience. For example, the first interface may be a page in an application, or may be a home interface (that is, a desktop) of the electronic device. This may be specifically determined based on an actual situation, and is not limited herein.

In a possible implementation, after displaying the second interface, the method further includes: displaying a third interface in response to an operation of viewing description information of the point of interest that is added to favorites, where the third interface includes description information of at least one point of interest that is added by the user to favorites, and the description information includes a name and an address of the point of interest, and a jump link of a page to which the point of interest belongs. In this way, the user can quickly learn the description information of the point of interest that is added by the user to favorites, and therefore can quickly view a point of interest required by the user.

In a possible implementation, after displaying the third interface, the method further includes: switching the third interface to a fourth interface in response to an operation of triggering a first jump link, where the first jump link is a jump link of a page to which a first point of interest belongs, and the fourth interface includes the page to which the first point of interest belongs. In this way, the user can quickly view a page to which a point of interest that the user is interested in belongs. This improves user experience.

In a possible implementation, after displaying the third interface, the method further includes: in response to an operation of performing screening on the point of interest that is added to favorites, updating a point of interest displayed in the third interface. In this way, the user may select, according to a requirement of the user, a point of interest that the user needs to view.

In a possible implementation, after displaying the first interface, the method further includes: in response to an operation of selecting a second point of interest marked on the map, displaying, around the second point of interest, content that matches a preference of the user, where the preference of the user is determined based on at least the point of interest that is added by the user to favorites. In this way, personalized recommendation can be provided for the user, thereby improving user experience.

According to a third aspect, an embodiment of this application provides an electronic device. The electronic device may include a touchscreen, one or more processors, and a memory. The memory stores one or more computer programs. The one or more computer programs include instructions. When the instructions are executed by an electronic device, the electronic device is enabled to perform the method provided in the first aspect or the second aspect.

According to a fourth aspect, an embodiment of this application provides a computer-readable storage medium. The computer-readable storage medium stores a computer program. When the computer program is run on an electronic device, the electronic device is enabled to perform the method provided in the first aspect or the second aspect.

According to a fifth aspect, an embodiment of this application provides a computer program product. When the computer program product is run on an electronic device, the electronic device is enabled to perform the method according to any one of the first aspect or the second aspect.

It may be understood that, for beneficial effects of the second aspect to the fourth aspect, reference may be made to related descriptions in the first aspect. Details are not described herein again.

### BRIEF DESCRIPTION OF DRAWINGS

The following briefly describes accompanying drawings that need to be used in descriptions of embodiments or a conventional technology.
FIG. 1 is a diagram of a hardware structure of an electronic device according to an embodiment of this application;
FIG. 2 is a diagram of a software structure of an electronic device according to an embodiment of this application;
FIG. 3 is a schematic flowchart of a point of interest display method according to an embodiment of this application;
FIG. 4(A) to FIG. 4(C) are diagrams of a process of viewing a point of interest according to an embodiment of this application;
FIG. 5(A) to FIG. 5(C) are diagrams of another process of viewing a point of interest according to an embodiment of this application;
FIG. 6(A) to FIG. 6(D) are diagrams of still another process of viewing a point of interest according to an embodiment of this application; and
FIG. 7(A) to FIG. 7(C) are diagrams of yet another process of viewing a point of interest according to an embodiment of this application.

### DESCRIPTION OF EMBODIMENTS

The term "and/or" in this specification is an association relationship for describing associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

In the specification and the claims of this specification, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, the terms such as "example" or "for example" indicate giving an example, an illustration, or a description. Any embodiment or design scheme described as an "example" or "for example" in embodiments of this application should not be explained as being more preferred or more advantageous than another embodiment or design scheme. Exactly, use of the terms such as "example" or "for example" is intended to present a related concept in a specific manner.

In the descriptions of embodiments of this application, unless otherwise specified, "a plurality of" means two or more. For example, a plurality of processing units mean two or more processing units, and a plurality of elements mean two or more elements.

It should be understood that a logistics robot mentioned in this embodiment of this application may be replaced with another device that can perform autonomous navigation, for example, a vehicle. This is not limited herein. For ease of description, a device that can implement autonomous navigation, for example, a logistics robot or a vehicle, is referred to as a "terminal device" below.

First, some technical terms in this application are described.

### (1) Point of interest

A point of interest (point of interest, POI) is a commonly used term in a geographic information system (geographic information system, GIS). In the GIS, POIs are generally all geographic objects that can be abstracted as points. The POI usually corresponds to a geographic entity closely related to lives of people, for example, a school, a bank, a restaurant, a gas station, a hospital, and a supermarket.

### (2) Floating window (floating window)

The floating window is a presentation form of an application, is a window that is suspended on another application, and usually supports functions such as moving and zooming in or out.

The following describes the technical solutions provided in this application.

In this embodiment of this application, when a user needs to view a specific location of a POI on a page displayed by an electronic device, the user may trigger, on the electronic device through a specific operation (for example, a single-finger touch and hold operation, a two-finger touch and hold operation, or a voice instruction), recognition of points of interest on the page in which the POI is located. After recognizing the points of interest on the page, the electronic device may mark these points of interest. After the user selects (for example, taps) a point of interest, the electronic device may display a floating window on a page on which the point of interest selected by the user is located, a map may be displayed in the floating window, and a location of the point of interest selected by the user is marked on the map. In this way, the user can view, on the page that the user currently browses, a specific location of a POI that the user is interested in, without performing switching between applications. This reduces operation steps of viewing the location of the POI, and improves user experience.

It may be understood that the electronic device in embodiments of this application may be an electronic device, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not particularly limited in embodiments of this application.

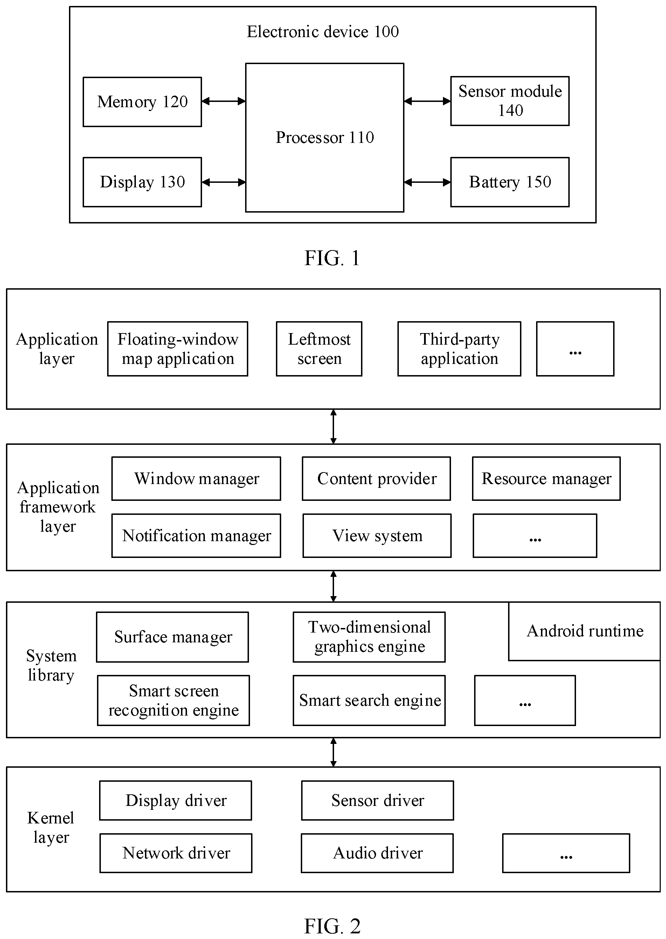

For example, FIG. 1 is a diagram of a structure of an electronic device according to an embodiment of this application. As shown in FIG. 1, the electronic device 100 may include a processor 110, a memory 120, a display 130, a sensor module 140, and a battery 150.

The processor 110 is a computing core and a control core of the electronic device 100. The processor 110 may include one or more processing units. For example, the processor 110 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In this embodiment, the NPU may be a neural-network (neural-network, NN) computing processor. The NPU quickly processes input information by referring to a structure of a biological neural network, for example, a transfer mode between human brain neurons, and may further continuously perform self-learning. The NPU may be used to implement applications such as intelligent cognition of the electronic device 100, for example, image recognition, facial recognition, voice recognition, text understanding, and text recognition. In some embodiments, the processor 110 may be configured to recognize and extract a point of interest on a page displayed by an application in the electronic device 100, to obtain the point of interest included on the page. In some embodiments, the processor 110 may further invoke a map application programming interface (application programming interface, API) configured on the electronic device 100, to query a location of the extracted point of interest, so as to obtain a location that is of each point of interest included on the page and that a user needs to query, so that a location of a point of interest viewed by the user is subsequently displayed on a map in a floating window. For example, because points of interest may have a same name, one point of interest may have a plurality of locations. In this case, the processor 110 may perform screening on, based on a location of another point of interest included on a page to which the point of interest belongs, a location that is of the point of interest and that needs to be determined. In some embodiments, the processor 110 may be further configured to: when the user selects a point of interest for adding to favorites, extract a keyword on a page to which the point of interest belongs, to determine an attribute of the point of interest, for example, a type to which the point of interest belongs. In addition, the processor 110 may write, into the memory 120, the attribute that is of the point of interest and that is determined by the processor 110, and description information such as a name of the point of interest, a location of the point of interest, a source of the point of interest, and a jump link of the page to which the point of interest belongs, to store the data by using the memory 120, thereby implementing unified management of points of interest that the user is interested in in different applications. Further, the processor 110 may perform statistical analysis on the description information that is of the point of interest and that is stored in the memory 120, to determine a preference of the user, so as to subsequently provide personalized content recommendation for the user. In some embodiments, the processor 110 may alternatively transmit, to a server (for example, a cloud server) through a communication module (not shown in the figure) in the electronic device 100, the attribute that is of the point of interest and that is determined by the processor 110, and description information such as a name of the point of interest, a location of the point of interest, a source of the point of interest, and a jump link of the page to which the point of interest belongs, to store the data by using the server. Further, the server may perform statistical analysis on the description information that is of the point of interest and that is stored in the server, to determine a preference of the user, so as to subsequently provide personalized content recommendation for the user.

The memory 120 may store a program, and the program may be run by the processor 110, so that the processor 110 performs a method performed by the electronic device 100 provided in this embodiment of this application. The memory 120 may further store data. The processor 110 may read the data stored in the memory 120. The memory 120 and the processor 110 may be separately disposed. Optionally, the memory 120 may alternatively be integrated into the processor 110. In some embodiments, the memory 120 may store description information of a point of interest that the user is interested in.

The display 130 may be configured to display an image, a video, and the like. The display 130 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The electronic device 100 may further include a sensor module 140. The sensor module 140 may include a touch sensor. The touch sensor may be configured to detect a touch operation performed on or near the electronic device 100. For example, the touch sensor may be implemented in a plurality of manners, for example, a resistive type, a capacitive type, an infrared type, and a surface acoustic wave type. The touch sensor may be disposed on the display 130. The touch sensor and the display 130 may form a touchscreen, which is also referred to as a "touch screen". The touch sensor may alternatively be disposed on a surface of the electronic device 100 at a location different from that of the display 130. In some embodiments, the sensor module 140 may also include a pressure sensor, a gyroscope sensor, a barometric pressure sensor, a magnetic sensor, an acceleration sensor, a distance sensor, an optical proximity sensor, a fingerprint sensor, a temperature sensor, an ambient light sensor, a bone conduction sensor, or the like.

A battery 150 may be further disposed on the electronic device 100. The battery 150 may supply power to the electronic device 100.

It may be understood that the structure shown in FIG. 1 in this embodiment does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by hardware, software, or a combination of software and hardware.

In FIG. 1, a software system of the electronic device 100 may use a layered architecture, an event-driven architecture, a microkernel architecture, a microservice architecture, or a cloud architecture. In this embodiment, an Android system with a layered architecture is used as an example to describe a software structure of the electronic device 100.

FIG. 2 is a diagram of a software structure of an electronic device 100 according to an embodiment of this application.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as a floating-window map application, a leftmost screen, and a third-party application (for example, a map). After the floating-window map application is started, a floating window may be displayed in a display interface of the electronic device 100, and a map is displayed in the floating window.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a resource manager, a notification manager, and the like.

The window manager is configured to manage a window program. The window manager may obtain a size of a display, determine whether there is a status bar, perform screen locking, take a screenshot, pop up a floating window related to the floating-window map application, zoom in or out the floating window, respond to an operation of a user in the floating window, and the like.

The content provider is configured to: store and obtain data, and enable the data to be accessed by an application. The data may include a text, an image, a web page link, and the like.

The view system includes a visual control, for example, a control for displaying a text, a control for displaying a picture, and a control for displaying a case in which a point of interest is tappable. The view system may be configured to construct an application. A display interface may include one or more views. For example, a display interface including a floating-window map application window may include a text display view and a picture display view.

The resource manager provides various resources such as a localized character string, an icon, a picture, and a layout file for an application.

The notification manager enables an application to display, in the status bar, notification information, which may be used for conveying a notification-type message that may automatically disappear after a short stay without user interaction. For example, the notification manager is configured to: give a message notification, and the like. The notification manager may alternatively be a notification that appears in a top status bar of the system in a form of a chart or scroll bar text, for example, a notification of an application running on the background or a notification that appears on a screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a performance function that needs to be called in Java language and a core library of Android.

The application layer and the application framework layer run in the virtual machine. The virtual machine executes Java files at the application layer and the application framework layer as binary files. The virtual machine is configured to execute functions such as object life cycle management, stack management, thread management, security and exception management, and garbage collection.

The system library may include a plurality of functional modules, for example, a surface manager (surface manager), a two-dimensional graphics engine (for example, an SGL), a smart screen recognition engine, and a smart search engine.

The surface manager is configured to manage a display subsystem and provide fusion of 2D and 3D layers for a plurality of applications.

The two-dimensional graphics engine is a drawing engine for two-dimensional drawing.

The smart screen recognition engine may be configured to recognize a text on a page displayed by the electronic device 100, to recognize a point of interest included on the page.

The smart search engine may be configured to: search for, based on a point of interest that is added by the user to favorites and/or a preference of the user, a point of interest that the user may be interested in, and make recommendation.

The kernel layer is a layer between hardware and software. The kernel layer may include a display driver, an audio driver, a sensor driver, a network driver, and the like.

The following describes an example of a working process of software and hardware of the electronic device 100 with reference to a starting scenario of the floating-window map application.

When the sensor module 140 receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap touch operation, and a control corresponding to the single-tap operation is a control of the floating-window map application. The floating-window map application invokes an interface of an application framework layer, so that the floating-window map application is started. Then, the display driver is started through invoking of the kernel layer, a floating window is displayed by the display 130, and a map is displayed in the floating window.

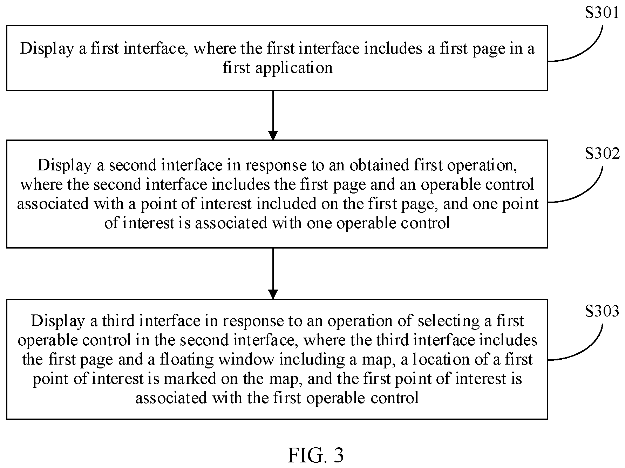

A related description of hardware and software of the electronic device 100 provided in this embodiment of this application is provided above. The following describes in detail the technical solutions provided in embodiments of this application with reference to FIG. 3.

For example, FIG. 3 is a schematic flowchart of a point of interest display method according to an embodiment of this application. The method may be applied to the electronic device 100 described in FIG. 1. As shown in FIG. 3, the point of interest display method may include the following steps.

S301: Display a first interface, where the first interface includes a first page in a first application.

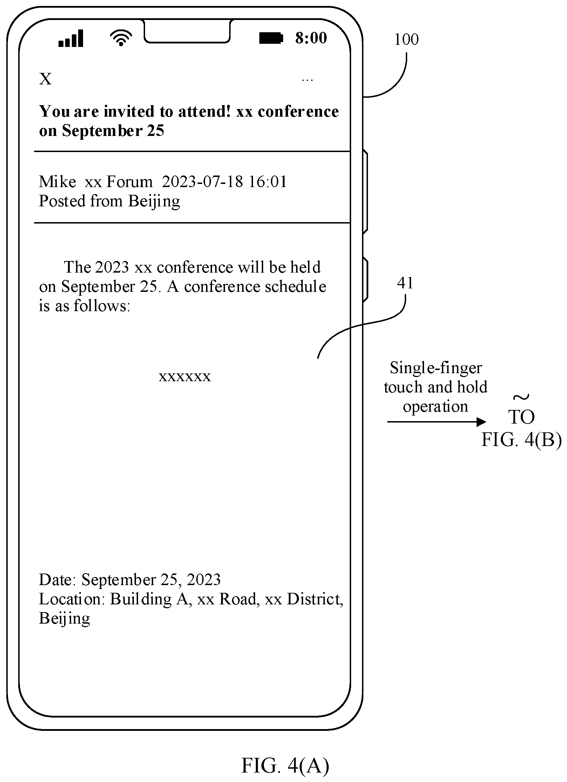

In this embodiment, a display of the electronic device 100 may display the first interface. The first interface includes the first page in the first application. The first application may be understood as an application (application, APP) that is being used by a user on the electronic device 100, for example, a social application, an entertainment application, or a group buying application. The first page is a page in the first application. For example, refer to FIG. 4(A) to FIG. 4(C). An interface shown in FIG. 4(A) may be understood as the first interface. In FIG. 4(A), the electronic device 100 displays one page 41 in a social application.

S302: Display a second interface in response to an obtained first operation, where the second interface includes the first page and an operable control associated with a point of interest included on the first page, and one point of interest is associated with one operable control.

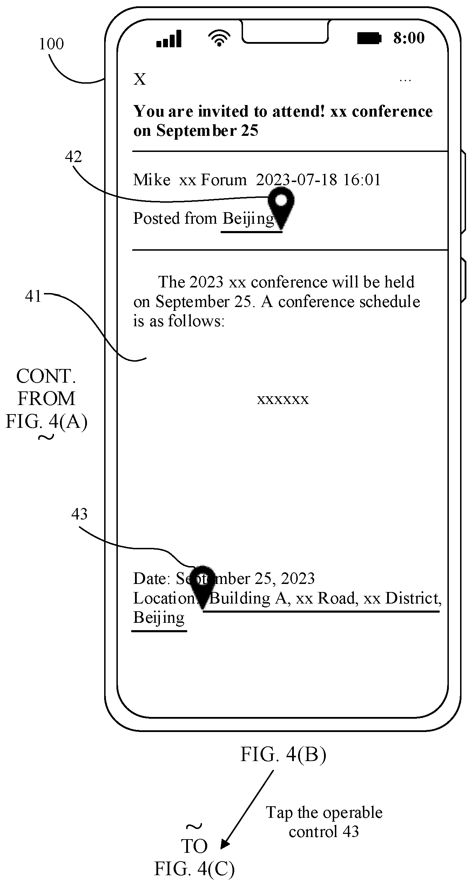

In this embodiment, the user may perform an operation on the first interface, for example, a two-finger touch and hold operation or a single-finger touch and hold operation. The operation described herein may be understood as an operation for recognizing a point of interest on a page, or the like. After the user completes a two-finger touch and hold operation, a single-finger touch and hold operation, or the like, the electronic device 100 may obtain the operation. Then, the electronic device 100 may display the second interface in response to the operation. The second interface may include the first page and the operable control associated with the point of interest included on the first page. One point of interest is associated with one operable control. For example, the operable control may be understood as a control that can be operated by the user, for example, a control that can be tapped by the user. In some embodiments, after the electronic device 100 may obtain an operation that is delivered by the user and that is for recognizing a point of interest on a page, the electronic device 100 may recognize the point of interest on the first page. For example, the electronic device 100 may first perform a screenshot operation on the first page, and then process, by using a technology such as named entity recognition (named entity recognition, NER), a page obtained through screenshot, to recognize the point of interest included on the first page. After recognizing points of interest on the first page, the electronic device 100 may mark these points of interest by using operable controls. For example, still refer to FIG. 4(A) to FIG. 4(C). In FIG. 4(A), after the user performs a single-finger touch and hold operation, the electronic device 100 may display an interface shown in FIG. 4(B). In FIG. 4(B), an operable control 42 is associated with a point of interest "Beijing", and an operable control 43 is associated with a point of interest "Building A, xx Road, xx District, Beijing".

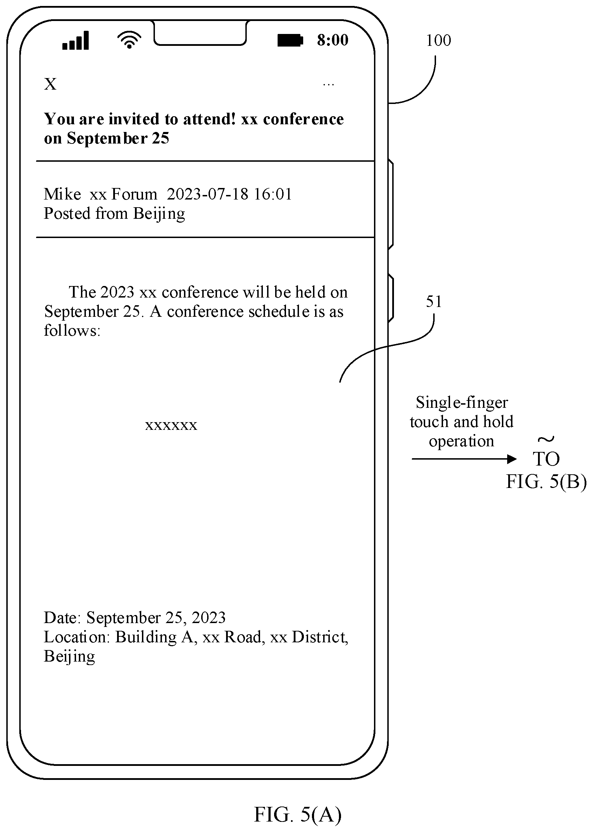

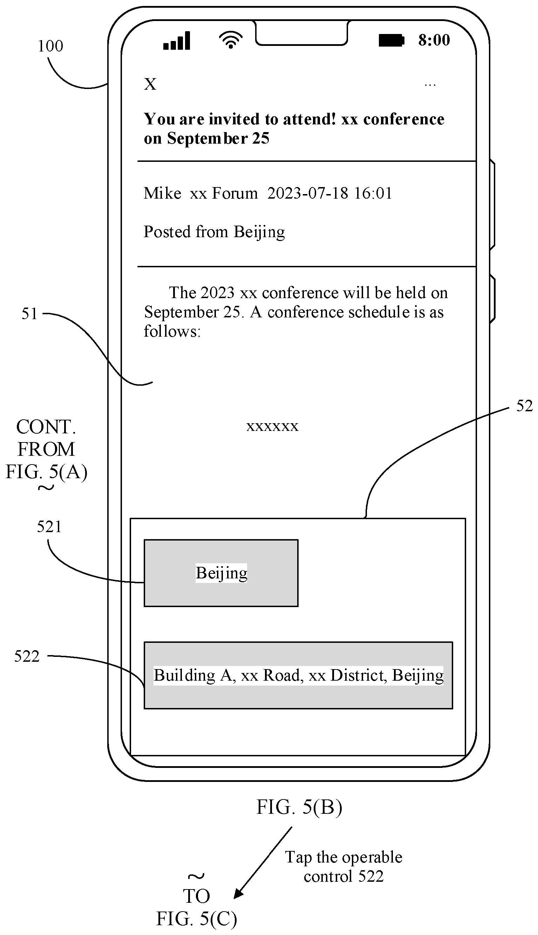

In addition, in addition to the manner shown in FIG. 4(B), the operable control may be displayed in another manner such as a pop-up window. For example, refer to FIG. 5(A) to FIG. 5(C). On a page 51 displayed in FIG. 5(A), after the user performs a single-finger touch and hold operation, as shown in FIG. 5(B), the electronic device 100 may display a pop-up window 52 on the page 51, and display operable controls 521 and 522 in the pop-up window 52. The operable control 521 is associated with a point of interest "Beijing", and the operable control 522 is associated with a point of interest "Building A, xx Road, xx District, Beijing". A name of the point of interest "Beijing" may be displayed on the operable control 521, and a name of the point of interest "Building A, xx Road, xx District, Beijing" may be displayed on the operable control 522.

It should be understood that, when the second interface is displayed due to a misoperation of the user, the user may return to the first interface through a specific operation (for example, a single-finger tap). In this case, after obtaining an operation that is triggered by the user and that is of returning to the first interface, the electronic device 100 may return to the first interface.

S303: Display a third interface in response to an operation of selecting a first operable control in the second interface, where the third interface includes the first page and a floating window including a map, a location of a first point of interest is marked on the map, and the first point of interest is associated with the first operable control.

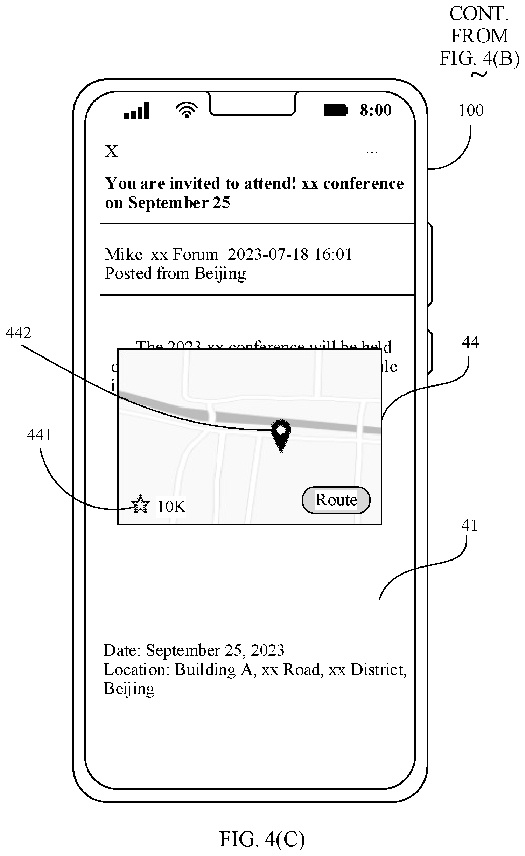

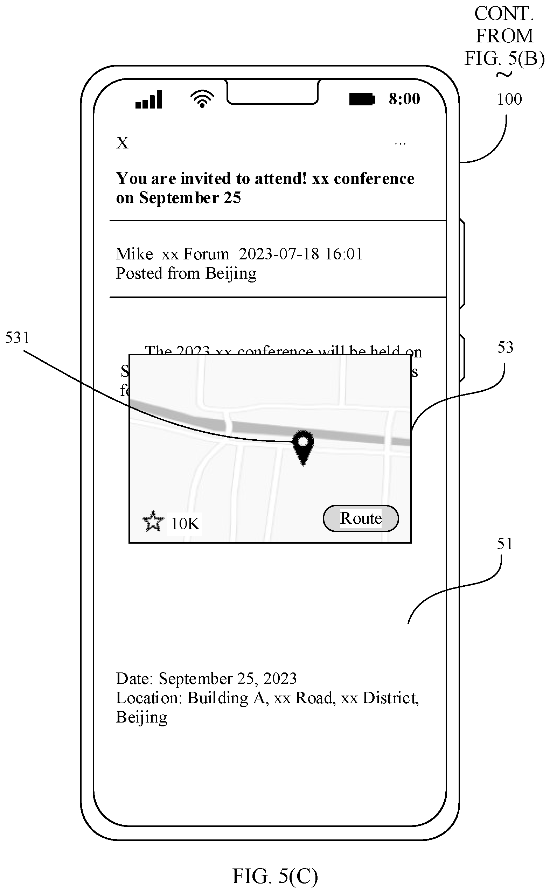

In this embodiment, after the electronic device 100 displays the second interface, the user may select an operable control associated with a point of interest that the user is interested in, to view a specific location of the point of interest that the user is interested in. For example, when the user is interested in the first point of interest on the first page, the user may view the location of the first point of interest by triggering an operation of selecting the first operable control associated with the first point of interest, for example, tapping the first operable control. After obtaining the operation of selecting the first operable control by the user, the electronic device 100 may display the third interface. The third interface includes the first page and the floating window including the map, and the location of the first point of interest is marked on the map. In other words, after the user chooses to view a point of interest, the electronic device 100 may display a floating window on a page currently displayed by the electronic device 100, and mark, in the floating window by using a map, a location of the point of interest selected by the user. For example, still refer to FIG. 4(A) to FIG. 4(C). In FIG. 4(B), after the user taps the operable control 43, the electronic device 100 may display an interface shown in FIG. 4(C). In FIG. 4(C), the electronic device 100 displays a floating window 44 on a page 41, displays a map in the floating window 44, and marks, on the map, a location 442 of the point of interest associated with the operable control 43. In addition, when a presentation form of the operable control is the form shown in FIG. 5(B), in FIG. 5(B), after the user taps the operable control 522, the electronic device 100 may display an interface shown in FIG. 5(C). In FIG. 5(C), the electronic device 100 displays a floating window 53 on the page 51, displays a map in the floating window 53, and marks, on the map, a location 531 of the point of interest associated with the operable control 522. In addition, after the third interface is displayed, the user may further choose to close the floating window. After the user performs an operation of closing the floating window, the electronic device 100 may close the floating window.

Therefore, a location of a point of interest that a user is interested in is presented in a form of a floating window, so that the user can view, on a page that the user currently browses, the location of the point of interest that the user is interested in, without performing switching between applications. This reduces operation steps of viewing the location of the point of interest, and improves user experience.

In some embodiments, a control for adding a point of interest to favorites may be configured in the floating window described in S303, for example, a control 441 shown in FIG. 4(C). The user selects (for example, taps) the control to add a point of interest that the user is interested in to favorites, to implement unified management of points of interest, in different applications, that the user is interested in. In this way, the user may subsequently quickly re-access, through a component related to the floating window, a point of interest previously viewed by the user, without searching, in different applications, for a point of interest that is added by the user to favorites, thereby improving efficiency of viewing a point of interest.

In this embodiment, when a floating window associated with a floating-window map application is in a closed state, when the user needs to view a point of interest previously viewed by the user, the user may start, through a specific operation (for example, a three-finger touch and hold operation, a voice instruction, or an entry of a leftmost screen), a component related to the floating window. In this case, a point of interest that is added by the user to favorites may be displayed in a display interface presented by the component related to the floating window. The display interface presented by the component related to the floating window may include a map, and the point of interest that is added by the user to favorites may be displayed by the map.

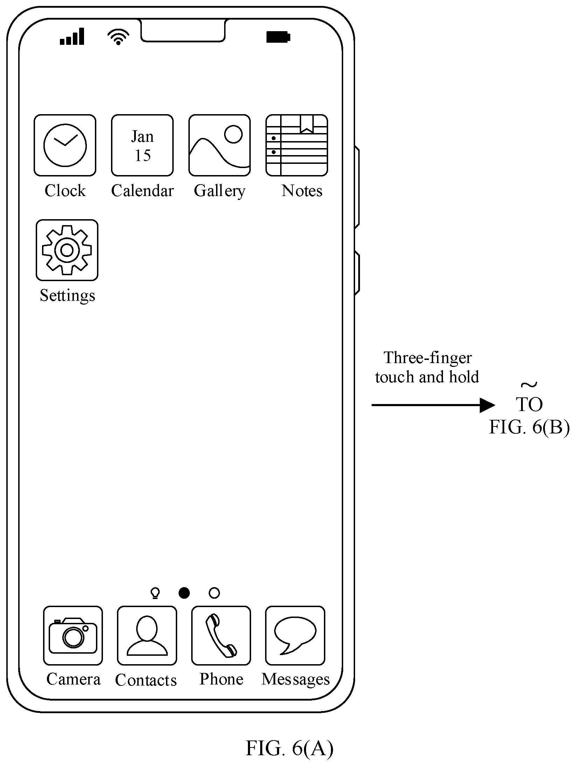

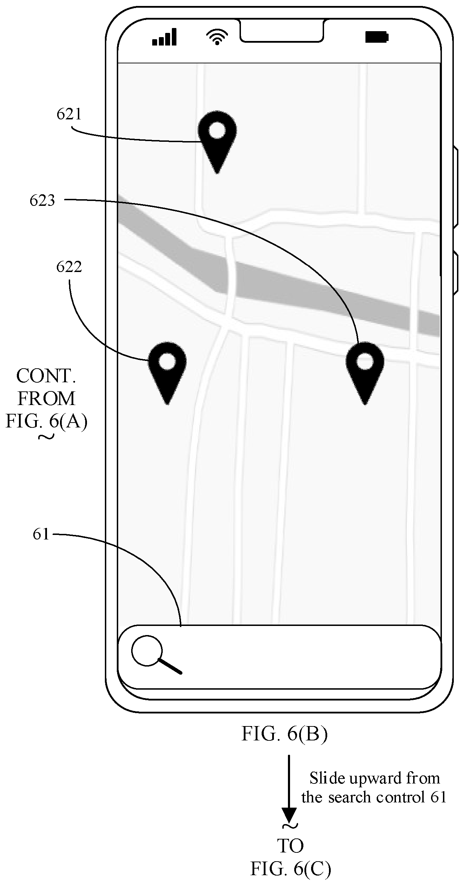

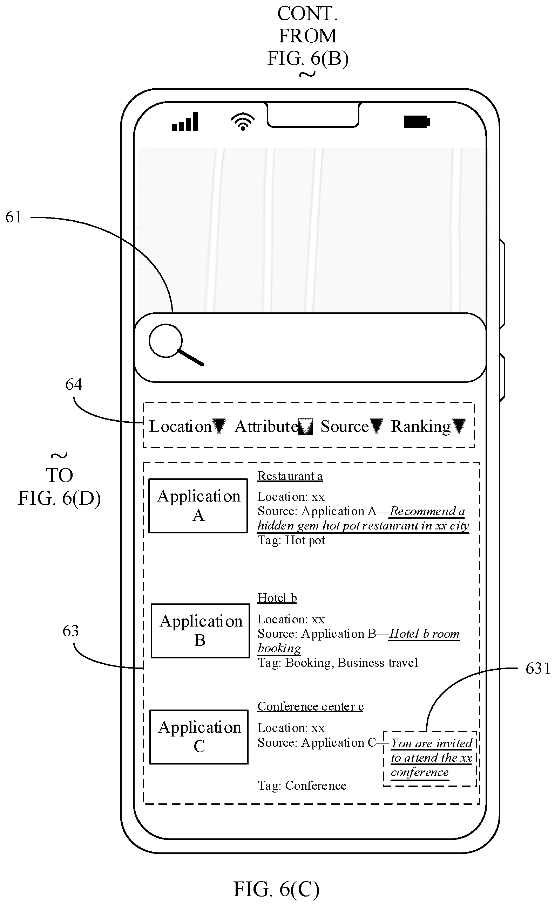

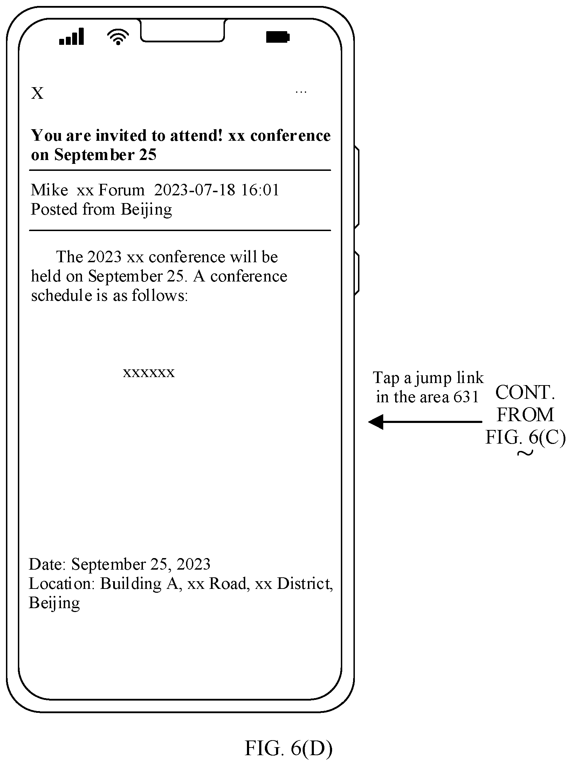

For example, refer to FIG. 6(A) to FIG. 6(D). In an interface shown in FIG. 6(A), the user may start, through three-finger touch and hold (which may certainly alternatively be another operation that can start a floating window) a component related to the floating window. After obtaining the three-finger touch and hold operation delivered by the user, the electronic device 100 may start the component related to the floating window. In this case, the electronic device 100 may display a display interface of the component related to the floating window in full screen, that is, display an interface shown in FIG. 6(B). In FIG. 6(B), points of interest that have been added by the user to favorites, for example, points of interest 621, 622, and 623, may be displayed on a map displayed by the component related to the floating window. In addition, a search control 61 may be displayed in the floating window. Through the search control 61, the user may search for the points of interest that are added by the user to favorites. In the interface shown in FIG. 6(B), the user may slide upward from the search control 61, and then the electronic device 100 may display an interface shown in FIG. 6(C). Certainly, in addition to sliding upward from the search control 61, another operation may alternatively be performed, provided that the interface shown in FIG. 6(C) can be displayed. This may be specifically determined based on an actual situation, and is not limited herein. For example, the operation of sliding upward from the search control 61 may be understood as an operation of viewing description information (for example, a name, a source, an address, a tag, and a jump link of a page to which the point of interest that is added to favorites belongs) of the point of interest. In the interface shown in FIG. 6(C), description information of the points of interest that are added by the user to favorites may be displayed in an area 63, and a control for performing screening on the points of interest may be displayed in an area 64. For example, the user may choose to perform screening on the points of interest based on locations, attributes, sources, ranking, or the like. For example, the user may select a point of interest in Beijing, or select a point of interest whose attribute is a group buying type, or select a point of interest in an application, or select distance-based ranking. In this embodiment, description information that is of a point of interest and that is displayed in the area 64 may include a jump link of a page to which the point of interest belongs (namely, a link to the page to which the point of interest belongs). When the user taps a jump link, a page to which a point of interest belongs is displayed. For example, in FIG. 6(C), after the user taps a jump link in an area 631, the electronic device 100 may display an interface shown in FIG. 6(D).

Certainly, after the user starts the component related to the floating window, the electronic device 100 may alternatively directly display the interface shown in FIG. 6(C). In this case, after the user slides down from the search control 61, the electronic device 100 may display the interface shown in FIG. 6(B). This may be specifically determined based on an actual situation, and is not limited herein.

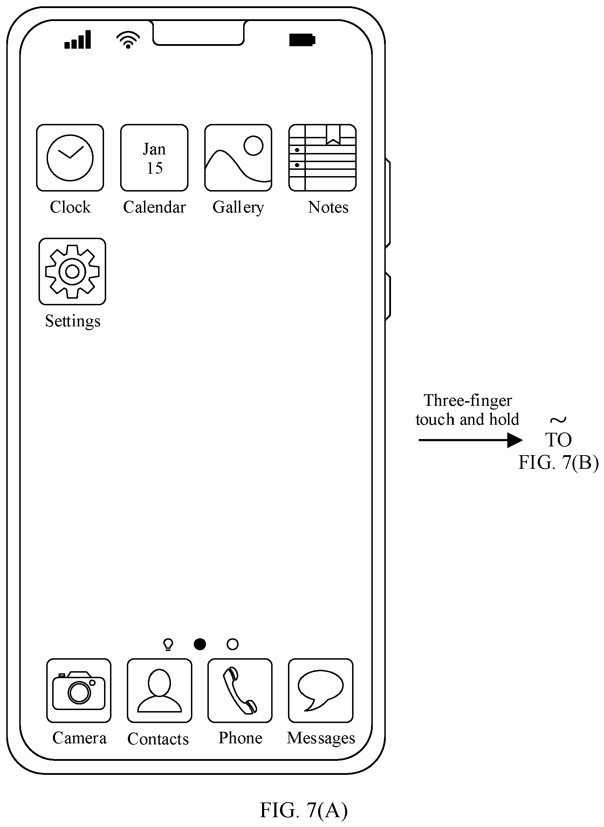

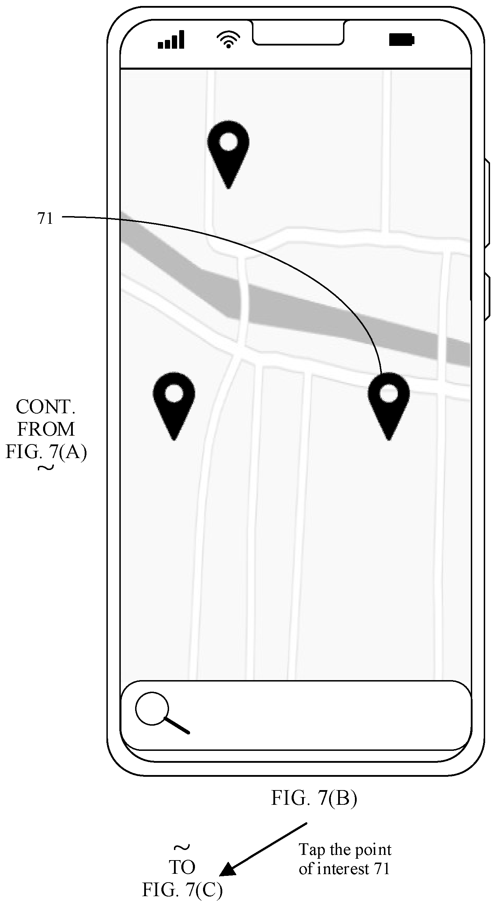

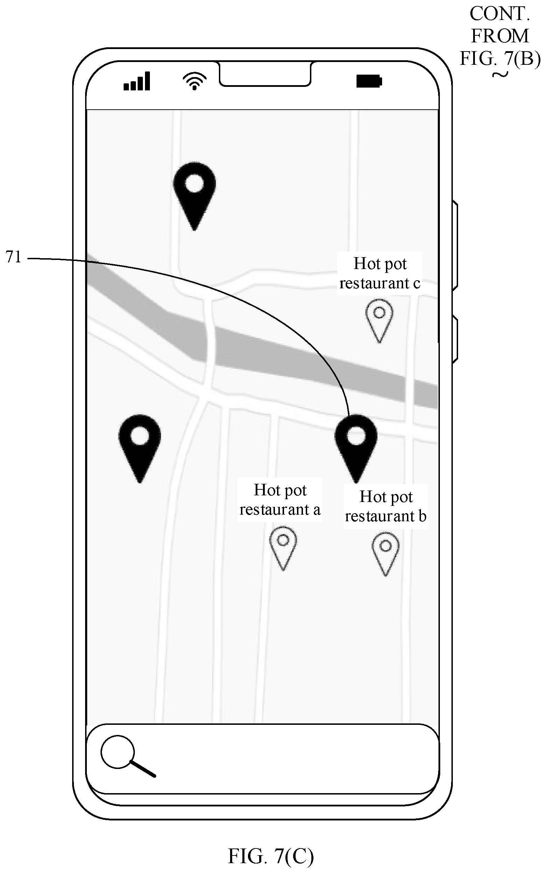

In addition, after recording the point of interest that is added by the user to favorites, the electronic device 100 may analyze a category and the like of the point of interest that is added by the user to favorites, to obtain a preference of the user. Then, after the user starts the component related to the floating window, and selects a point of interest in the display interface presented by the component related to the floating window, content that matches the preference of the user and that is around the point of interest may be displayed to the user. In this way, personalized content recommendation can be provided for the user based on content that is added by the user to favorites, thereby improving user experience. For example, refer to FIG. 7(A) to FIG. 7(C). In an interface shown in FIG. 7(A), the user may start, through three-finger touch and hold (which may certainly alternatively be another operation that can start a floating window) a component related to the floating window. After obtaining the three-finger touch and hold operation delivered by the user, the electronic device 100 may start the component related to the floating window. In this case, the electronic device 100 may display a display interface of the component related to the floating window in full screen, that is, display an interface shown in FIG. 7(B). In FIG. 7(B), a point of interest that has been added by the user to favorites may be displayed on a map displayed by the component related to the floating window. In FIG. 7(B), after the user taps a point of interest 71, if the user prefers hot pot food, the electronic device 100 may display an interface shown in FIG. 7(C). In the interface shown in FIG. 7(C), the electronic device 100 may mark, on the map displayed by the component related to the floating window, a hot pot restaurant located around the point of interest 71. In some embodiments, the electronic device 100 may further record a user behavior, for example, usage, by the user, of the point of interest that is added by the user to favorites, and/or consumption, by the user, of content recommended by the electronic device 100. Further, the electronic device 100 may analyze the user behavior recorded by the electronic device 100, to update the preference of the user determined by the electronic device 100.

In some embodiments, when a server records an attribute of the point of interest that is added by the user to favorites, and description information such as a name of the point of interest, a location of the point of interest, a source of the point of interest, and a jump link of a page to which the point of interest belongs, the server may transmit, to the electronic device 100, a preference of the user obtained through analysis. In this way, after the user starts the component related to the floating window and selects a point of interest in the display interface presented by the component related to the floating window, the electronic device 100 may display, to the user, content that matches the preference of the user and that is around the point of interest. In addition, the electronic device 100 may also transmit the user behavior obtained by the electronic device 100 to the server, so that the server updates the preference of the user based on the user behavior.

In some embodiments, a setting entry of the component related to the floating window may be configured in the electronic device 100. Through this setting entry, the user can set the component related to the floating window, for example, set a source of the map displayed by the component related to the floating window, whether to enable the component related to the floating window, and an operation mode of starting the component related to the floating window.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, the described embodiments may be combined based on an actual situation, and a combined solution still falls within the protection scope of this application.

Based on the method in the foregoing embodiments, an embodiment of this application provides a computer-readable storage medium. The computer-readable storage medium stores a computer program. When the computer program is run on an electronic device, the electronic device is enabled to perform the method in the foregoing embodiments. For example, the computer-readable storage medium may be any usable medium that can be stored by a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like.

Based on the method in the foregoing embodiments, an embodiment of this application provides a computer program product including instructions. When the computer program product is run on an electronic device, the electronic device is enabled to perform the method in the foregoing embodiments.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of this application.

## Claims

1. A point of interest display method, applied to an electronic device, wherein the method comprises:
displaying a first interface, wherein the first interface comprises a first page in a first application;
displaying a second interface in response to an obtained first operation, wherein the second interface comprises the first page and an operable control associated with a point of interest comprised on the first page, and one point of interest is associated with one operable control; and
displaying a third interface in response to an operation of selecting a first operable control in the second interface, wherein the third interface comprises the first page and a floating window, the floating window comprises a map, a location of a first point of interest is marked on the map, and the first point of interest is associated with the first operable control.

2. The method according to claim 1, wherein after displaying the third interface, further comprising:
recording the first point of interest in response to an operation of triggering a first control in the floating window, wherein the first control is used to add a point of interest to favorites.

3. The method according to claim 1 or 2, wherein the operable control is at a location of the point of interest associated with the operable control.

4. The method according to claim 1 or 2, wherein the second interface comprises a first pop-up window, the first pop-up window comprises the operable control, and a name of the point of interest associated with the operable control is displayed on the operable control.

5. The method according to any one of claims 1 to 4, wherein after displaying the third interface, further comprising:
closing the floating window in response to an operation of closing the floating window.

6. The method according to claim 5, wherein after closing the floating window, further comprising:
displaying a fourth interface in response to an operation of starting a component related to the floating window, wherein the fourth interface comprises a map, and a location of a point of interest that is added by a user to favorites in at least one application is marked on the map.

7. The method according to claim 6, wherein after displaying the fourth interface, further comprising:
displaying a fifth interface in response to an operation of viewing description information of the point of interest that is added to favorites, wherein the fifth interface comprises description information of at least one point of interest that is added by the user to favorites, and the description information comprises a name and an address of the point of interest, and a jump link of a page to which the point of interest belongs.

8. The method according to claim 7, wherein after displaying the fifth interface, further comprising:
switching the fifth interface to a sixth interface in response to an operation of triggering a first jump link, wherein the first jump link is a jump link of a page to which a second point of interest belongs, and the sixth interface comprises the page to which the second point of interest belongs.

9. The method according to claim 7 or 8, wherein after displaying the fifth interface, further comprising:
in response to an operation of performing screening on the point of interest that is added to favorites, updating a point of interest displayed in the fifth interface.

10. The method according to any one of claims 6 to 9, wherein after displaying the fourth interface, further comprising:
in response to an operation of selecting a third point of interest marked on the map, displaying, around the third point of interest, content that matches a preference of the user, wherein the preference of the user is determined based on at least the point of interest that is added by the user to favorites.

11. A point of interest display method, applied to an electronic device, wherein the method comprises:
displaying a first interface; and
displaying a second interface in response to an operation of starting a component related to a floating-window map application, wherein the second interface comprises a map, and a location of a point of interest that is added by a user to favorites in at least one application is marked on the map.

12. The method according to claim 11, wherein after displaying the second interface, further comprising:
displaying a third interface in response to an operation of viewing description information of the point of interest that is added to favorites, wherein the third interface comprises description information of at least one point of interest that is added by the user to favorites, and the description information comprises a name and an address of the point of interest, and a jump link of a page to which the point of interest belongs.

13. The method according to claim 12, wherein after displaying the third interface, further comprising:
switching the third interface to a fourth interface in response to an operation of triggering a first jump link, wherein the first jump link is a jump link of a page to which a first point of interest belongs, and the fourth interface comprises the page to which the first point of interest belongs.

14. The method according to claim 11 or 12, wherein after displaying the third interface, further comprising:
in response to an operation of performing screening on the point of interest that is added to favorites, updating a point of interest displayed in the third interface.

15. The method according to any one of claims 11 to 14, wherein after displaying the first interface, further comprising:
in response to an operation of selecting a second point of interest marked on the map, displaying, around the second point of interest, content that matches a preference of the user, wherein the preference of the user is determined based on at least the point of interest that is added by the user to favorites.

16. An electronic device, comprising:
a display;
one or more processors; and
a memory, wherein
the memory stores one or more computer programs, the one or more computer programs comprise instructions, and when the instructions are executed by the one or more processors, the electronic device is enabled to perform the method according to any one of claims 1 to 10, or perform the method according to any one of claims 11 to 15.

17. A computer-readable storage medium, wherein the computer-readable storage medium stores a computer program, and when the computer program is run on an electronic device, the electronic device is enabled to perform the method according to any one of claims 1 to 10, or perform the method according to any one of claims 11 to 15.

18. A computer program product, wherein when the computer program product is run on an electronic device, the electronic device is enabled to perform the method according to any one of claims 1 to 10, or perform the method according to any one of claims 11 to 15.
